# DEMANDE DE BREVET EUROPEEN

(11) **EP 2 535 991 A1**
(43) Date de publication de la demande: **19.12.2012**
(21) Numéro de dépôt: 12171675.7
(22) Date de dépôt: 12.06.2012
(51) Int. Cl.: H02G 3/04

(54) **CONDUITE DE PROTECTION NOTAMMENT DESTINÉE AU LOGEMENT DE CABLES ELECTRIQUES**

(30) Priorité: 15.06.2011 US 201161497164 P
(71) Demandeur: Aerazur, 78370 Plaisir (FR)
(72) Inventeur: Rousseau, Franck, 37320 TRUYES (FR); Tendron, Yohan, 37520 LA RICHE (FR)
(74) Mandataire: Aupetit, Muriel J. C.

(57) **Abrégé**

L'invention concerne une conduite adaptée en particulier, mais pas exclusivement, à un avion. La conduite est flexible, et peut présenter un petit rayon de courbure pouvant être obtenu sans torsion et permettre d'accéder sur la majeure partie ou la totalité de sa longueur au fil électrique ou câble à l'intérieur. Elle associe des technologies de gaine ouverte/fendue et de parois à ondulations pour fournir une conduite à corps ouvert/fendu ondulée.

## Description

La présente invention concerne une conduite ou gaine de protection utilisée en particulier, mais pas exclusivement, pour recevoir des fils/câbles électriques, et concerne plus particulièrement une conduite dont le corps est ouvert/fendu sur au moins une partie de sa longueur.

La gaine ou conduite est destinée à être utilisée en particulier (mais là encore pas exclusivement) dans un aéronef tel qu'un avion.

Le brevet américain US 6 563 045 au nom de Goett, et al., décrit diverses conduites flexibles et légères mises au point pour être utilisées principalement à bord d'un avion. La conduite est en matière plastique du type PTFE (polytétrafluoroéthylène), et dotée sur sa face externe de nervures, la conduite étant de manière connue obtenue par extrusion et formage pour fournir les nervures. Cette conduite fermée sur sa longueur et en matière plastique permet d'être utilisée dans un environnement sévère. La conduite peut inclure une âme interne en tuyau déformable dont la surface extérieure est ondulée de façon hélicoïdale. Un tissu métallisé, habituellement amené sous forme de bande, peut être enroulé autour des ondulations hélicoïdales et postformé sur l'hélice ondulée. L'âme ondulée et le tissu métallisé, ainsi que d'autres éléments optionnels, sont ensuite enfermés dans une enveloppe protectrice cylindrique lisse ou dans une enveloppe qui est elle-même ondulée. La conduite présente un corps fermé à l'exclusion de ses extrémités distales.

La conduite du type décrit dans ce brevet américain de Goett protège bien les fils électriques ou les câbles logés à l'intérieur. Toutefois, elle est quelque peu encombrante et présente un rayon de courbure relativement grand. Ces caractéristiques compliquent l'installation de la conduite dans certains espaces restreints, ce qui réduit l'utilité globale de la conduite. En outre, dès qu'un fil électrique ou un câble est introduit dans la conduite, il est accessible uniquement aux extrémités de la conduite.

Au contraire de la conduite du brevet américain de Goett, une conduite textile (éloignée des conduites usuelles en matière plastique obtenues par extrusion, telles celle de Goet) dont le corps longitudinal est ouvert permet d'accéder aux fils électriques ou aux câbles introduits à n'importe quel endroit sur sa longueur. Ce type de conduite textile est utilisée notamment à bord des avions à des endroits généralement distincts des conduites PTFE du type celle de Goet, car devant être agencées dans un environnement protégé. Une telle conduite textile peut aussi avoir un rayon de courbure plus petit que la conduite à paroi fermée du brevet Goett, ce qui accroît son utilité dans certaines régions confinées. Cependant, pour obtenir ce rayon de courbure plus petit, cette conduite textile ouverte doit habituellement être tournée sur elle-même/toronnée durant l'installation pour éviter tout écartement de la conduite perpendiculairement à son corps longitudinal, engendrant sinon un manque de protection des câbles. En outre, la torsion gêne, voire empêche, la réouverture de la conduite.

Le terme « toronner » dans la suite de la description s'entend comme l'action de tourner, tordre, appliquer une torsion sur le corps de la conduite de protection.

On entend dans la suite de la description par « fil » relatif au matériau constitutif de la conduite, un matériau flexible mono ou multi-filaments, fait, par exemple à partir de polyétheréthercétone (PEEK), de méta-aramide, de polysulfure de phénylène (PPS), ou une combinaison de ceux-ci.

Le terme « textile », tel qu'utilisé ci-après, se réfère à tout dispositif fait de fils multiples assemblés entre eux, qui sont notamment tricotés ou tissés. Le textile peut comprendre, mais pas exclusivement, au moins un fil thermo-formable.

La présente invention vise à fournir une conduite qui est flexible, qui donne accès aux fils électriques ou aux câbles logés à l'intérieur sur sa longueur, et qui a un petit rayon de courbure. La conduite de l'invention présente en outre un petit rayon de courbure sans torsion, contrairement à une conduite textile à corps ouvert classique. Elle conserve de plus une section transversale généralement circulaire dans laquelle on introduit les fils et les câblages.

Selon l'invention, la conduite comprend une paroi flexible ayant d'une façon générale la forme d'un cylindre, la paroi flexible étant fendue selon au moins une certaine longueur et selon un axe longitudinal, **caractérisée en ce que** la paroi est ondulée. On entend par « ondulée », des formes en saillie de la face externe de la paroi, telles que des cannelures.

Les modes de réalisation de l'invention associent des technologies à corps ouvert et à ondulations (cannelures) pour fournir une conduite textile ouverte/fendue et ondulée (cannelée). En combinant des textiles flexibles et des ondulations, le pliage ou le cintrage de la conduite ne génère aucun écartement du matériau. En particulier, dans les courbes prises par la conduite lors de son installation ou au cours de son utilisation, cette configuration au corps fendu et doté d'ondulations (alternance de nervures et de rainures sur la paroi) n'engendre aucune ouverture/bâillement perpendiculairement au corps longitudinal (à la fente longitudinale de la conduite), les câbles restant ainsi protégés. De plus, cela réduit les frictions avec les fils et câbles. En raison de la rigidité résultant des ondulations et l'inutilité de toronner la conduite durant l'installation, la pression exercée par le corps de la conduite sur les fils électriques, en particulier de manière connue entre les points de serrage et de fixation de la conduite, est avantageusement relâchée.

La conduite de la présente invention peut être formée d'une façon générale comme un cylindre qui est ouvert/fendu suivant un axe longitudinal. La conduite se ferme en se chevauchant sur elle-même.

Ainsi, avantageusement, la paroi flexible se chevauche pour former une région de chevauchement, de préférence le chevauchement correspondant à un angle d'au plus 130°, notamment entre 65 et 130°, en particulier entre et 70 et 110°. Ce chevauchement améliore le maintien en position fermée de la conduite. La région de chevauchement présente ainsi deux fois l'épaisseur d'autres régions, car elle comprend deux couches de matériau contiguës.

Ce chevauchement engendre par la configuration ondulée de la paroi une coopération mutuelle des nervures et des rainures d'un bord de la fente longitudinale du corps de la conduite avec l'autre bord opposé. Cette coopération mutuelle, sensiblement à la manière de moyens du type mâles-femelles, assure une meilleure prise d'un bord longitudinal sur l'autre de la paroi fendue et garantit un maintien dans le temps d'une surface de contact sur l'autre. La conduite de l'invention n'impose par conséquent pas de la toronner.

En variante, les bords du corps de la conduite (de chaque côté de la fente) suivant l'axe longitudinal peuvent simplement être contigus, auquel cas il n'y a pas (ou pratiquement pas) de chevauchement.

Les ondulations comprennent une alternance de nervures et de rainures.

Les nervures et les rainures peuvent présenter diverses variantes de formes telles qu'en dents de scie, ou en créneau ou de forme sinusoïdale.

Les ondulations ne sont pas parallèles à l'axe longitudinal du corps de la conduite. Elles forment un angle par rapport à un axe central de la conduite Chaque nervure définit un segment central longitudinal qui forme avec l'axe central et longitudinal de préférence un angle compris entre (approximativement) 40 et 140°, en particulier de 90°. De plus, les ondulations peuvent s'étendre autour de l'axe longitudinal de manière hélicoïdale ou annulaire.

La conduite est faite d'un matériau textile comprenant un ou plusieurs fils en matériau flexible, souple, de préférence à base de matière thermoformable, notamment de matière plastique du type PEEK, méta-aramide, PPS, ou d'une combinaison de ceux-ci.

La conduite est avantageusement faite à partir d'une matière textile à base de fils tissés et/ou tricotés.

La conduite peut intégrer une ou plusieurs fonctionnalités, par exemple par l'ajout de fils spécifiques ou d'une ou de plusieurs couches supplémentaires fonctionnelles. La fonction de blindage électromagnétique peut notamment être associée à la conduite.

La fabrication de la conduite de la présente invention peut utiliser une âme ou un noyau usiné (ou formé d'une autre manière) avec des ondulations correspondant à celles de la conduite finale. Le noyau peut être placé à l'intérieur d'un corps (longiligne) non ondulé et non formé ouvert/fendu suivant un axe longitudinal pour former un ensemble. L'ensemble comprenant la conduite non formée et le noyau, peut alors être placé dans un moule usiné (ou créé d'une autre manière), ondulé de forme complémentaire à celle du noyau ondulé, en vue de former les ondulations du corps. Le moule ainsi que l'ensemble sont ensuite chauffés et refroidis au moins un cycle pour former la conduite en résultant. L'ensemble (la conduite) peut alors être retiré du moule, et le noyau peut être retiré du corps de la conduite ainsi créée, pour préparer la conduite à une utilisation.

La présente invention a donc pour objet sans caractère limitatif et exclusif de proposer une conduite destinée à loger des fils électriques, des câbles et autres objets allongés.

La présente invention a pour autre objet, non exclusivement, de proposer une conduite flexible qui donne néanmoins accès à son intérieur sur sa longueur.

La présente invention a pour autre objet, non exclusivement, de proposer une conduite avec un petit rayon de courbure pouvant être obtenu sans torsion.

La présente invention a aussi pour objet, non exclusivement, de proposer une conduite dont le corps est à la fois fendu (longitudinalement) et (à surface) ondulée.

La présente invention a en outre pour objet, non exclusivement, de proposer une conduite dont les ondulations peuvent former un angle par rapport à un axe central de la conduite.

La présente invention a pour autre objet, non exclusivement, de proposer une conduite dont les ondulations sont formées de manière hélicoïdale ou annulaire, et de préférence orientées entre 40 et 140° par rapport à l'axe central, en particulier à 90°.

La présente invention a encore pour autre objet, non exclusivement, de proposer des procédés de fabrication d'une conduite dans lesquels un matériau non ondulé, à corps ouvert/fendu, est moulé avec un noyau ondulé à l'intérieur, le noyau étant retiré par la suite.

L'invention est également relative à l'utilisation d'une telle conduite, qui est par exemple agencée dans un aéronef, notamment un avion.

L'invention est aussi relative à un aéronef, en particulier un avion, comprenant :
a. des moyens pour produire un signal électrique;
b. des moyens pour recevoir le signal électrique ; et
c. une conduite pour transporter le signal électrique des moyens de production aux moyens de réception, **caractérisé en ce que** la conduite comprend une paroi flexible ayant d'une façon générale la forme d'un cylindre, la paroi flexible étant fendue suivant un axe longitudinal, et ondulée.

D'autres objets, caractéristiques et avantages de la présente invention apparaîtront dans la description qui suit à l'aide d'exemples uniquement illustratifs et nullement limitatifs de la portée de l'invention, et à partir des illustrations ci-jointes, dans lesquelles :
- La figure 1 est une vue en perspective d'un exemple de conduite de la présente invention.
- La figure 2A est une vue schématique en élévation de la conduite de la figure 1 (les ondulations n'étant pas illustrées).
- La figure 2B est une vue en perspective de la version schématisée de la conduite de la figure 2A.
- La figure 3A est une vue de dessus de la conduite de la figure 1.
- Les figures 3B à 3D sont des vues schématiques de variantes de formes d'ondulations différentes de celles de la figure 3A.
- La figure 4 est une vue de dessus de la conduite de la figure 1 illustrant un exemple d'orientation angulaire des ondulations par rapport à un axe central de la conduite.

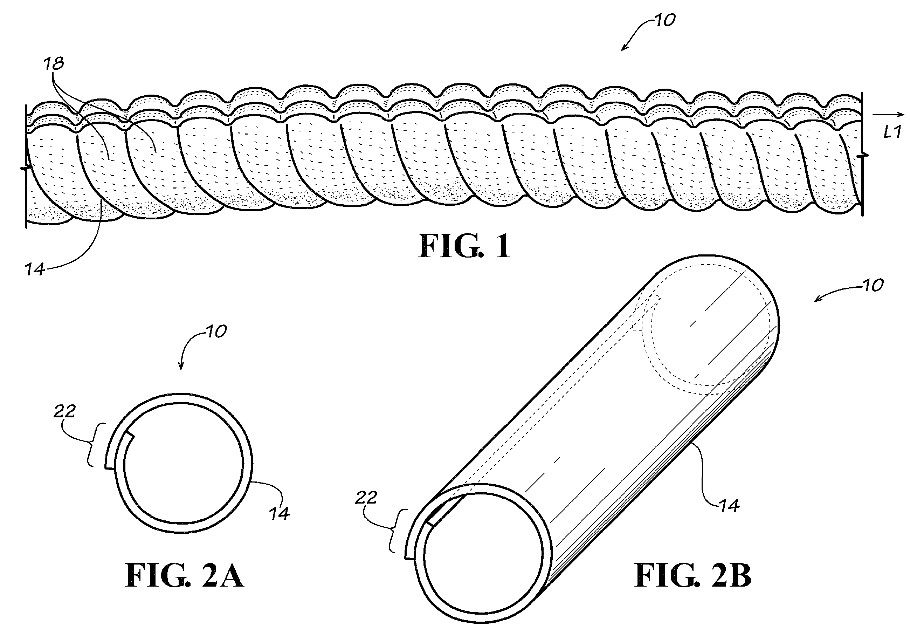

La figure 1 illustre un exemple de conduite 10 selon la présente invention. La conduite 10 comprend de préférence une paroi généralement tubulaire ou cylindrique 14 qui est ouverte (fendue) suivant un axe longitudinal L1. La paroi 14 est en outre de préférence ondulée en présentant de multiples ondulations 18. Les ondulations 18 peuvent avantageusement s'étendre par rapport à l'axe longitudinal de façon hélicoïdale ou annulaire, bien que d'autres formes puissent être employées en variante. La conduite 10 est destinée à recevoir des faisceaux de fils électriques ou de câbles, bien que d'autres objets en particulier longilignes puissent être logés à l'intérieur à la place. Étant donné que la paroi 14 est ouverte/fendue suivant l'axe L1, il est possible d'accéder aux faisceaux n'importe où le long de l'axe L1. Offrir un tel accès peut être utile dans de nombreuses circonstances, par exemple si une réparation ou un remplacement de fils ou de câbles, ou un raccordement de ceux-ci, est nécessaire.

En position d'utilisation de la conduite, lorsque celle-ci accueille des câbles, la paroi fendue est refermée sur elle-même, ses bords longitudinaux de part et d'autre de la fente étant soit aboutés, soit se chevauchent.

Les figures 2A et 2B montrent la conduite 10 de façon schématique, les ondulations 18 n'étant pas représentées. Dans un mode de réalisation préféré, la paroi 14 du corps de la conduite avec ondulations se chevauche pour « fermer » la conduite ouverte.

La région de chevauchement 22 inclut par conséquent deux couches parallèles de superposition de paroi 14 et possède deux fois l'épaisseur de la paroi 14. Ce chevauchement peut atteindre 180° mais l'angle préféré lorsque des fils électriques sont installés se situe entre 65° et 130°, en particulier entre 70 et 110°, le comportement global de la conduite dans cette dernière plage de chevauchement étant optimal. Comme cela est particulièrement détaillé sur la figure 2A, la conduite 10 conserve néanmoins une section transversale généralement circulaire dans laquelle des fils électriques, des câbles ou analogues peuvent être introduits. Il est possible d'accéder aux matériaux introduits simplement en séparant les couches de la paroi 14 dans la région de chevauchement 22.

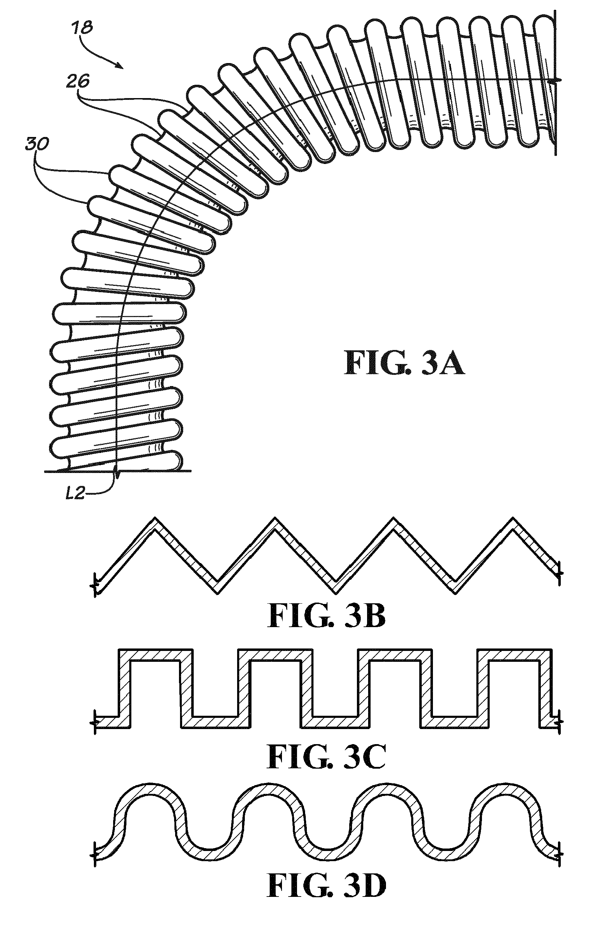

La figure 3A détaille une forme préférée d'ondulations 18 pour la conduite 10. Les ondulations 18 peuvent être définies en alternant des rainures 26 et des nervures 30. Ces rainures 26 et nervures 30 peuvent être par rapport à l'axe longitudinal de la conduite, hélicoïdales (et donc continues sur une longueur donnée de conduite 10, excepté au niveau de l'ouverture longitudinale suivant l'axe L1), annulaires (et donc discontinues sur une longueur donnée de conduite 10), ou avoir une autre forme appropriée ou souhaitée. Les rainures 26 et les nervures 30 n'ont pas nécessairement besoin d'être formées ou configurées comme illustré sur la figure 3A ; à la place, par exemple, elles peuvent prendre la forme en dents de scie de la figure 3B, la forme en créneau de la figure 3C, ou la forme d'une sinusoïde de la figure 3D. En effet, l'homme du métier adaptera la forme des ondulations 18 en fonction du comportement ou de l'application visée pour la conduite 10.

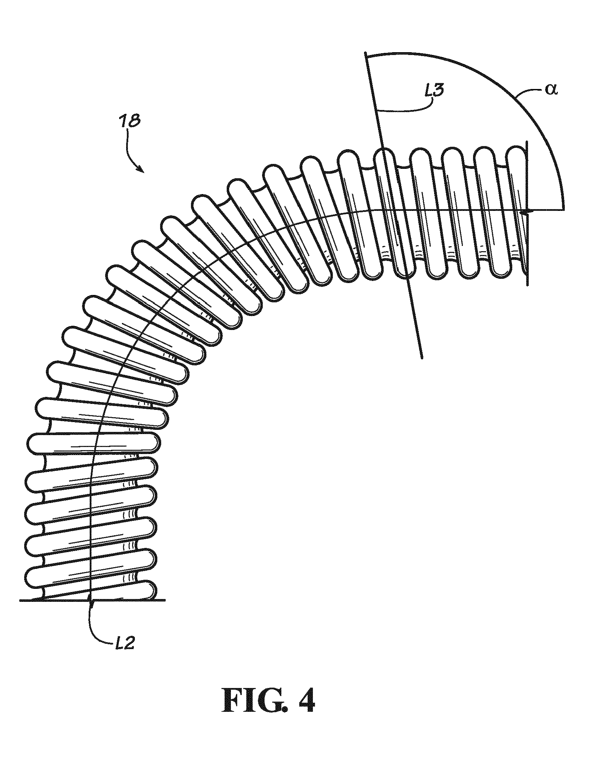

La figure 3A montre également l'axe central L2 de la conduite 10. Étant donné que la conduite 10 est courbée sur la figure 3A, l'axe central L2 est également courbé. Cela est aussi vrai pour la figure 4. Cependant, la figure 4 détaille en outre un angle α d'une nervure 30 par rapport à l'axe central L2. En supposant que les nervures 30 sont formées de sorte que chacune définisse un segment central longitudinal L3, l'angle α peut être défini par l'intersection de l'axe L2 et du segment L3 comme le montre la figure 4. L'angle α se situe de préférence dans une plage allant de (ou de l'ordre de) 40° à 140°, bien que n'importe quel angle puisse être possible dans certains cas.

Les nervures et les rainures présentent de préférence, selon la longueur de la conduite, des dimensions uniformes en largeur. On entend par « largeur », l'extension transversale au segment longitudinal L3.

La conduite 10 peut être fabriquée de n'importe quelle manière appropriée. Un exemple de procédé de fabrication utilise un corps longiligne ouvert/fendu en textile non ondulé, un noyau ondulé et un moule ondulé de forme complémentaire au noyau ondulé. Au départ, le noyau est placé à l'intérieur du corps en textile. L'ensemble du noyau et du corps est alors placé dans un moule configuré pour compléter les ondulations du noyau, et l'ensemble ainsi que le moule sont chauffés et refroidis. Après le refroidissement final, l'ensemble est retiré du moule et le noyau est retiré du corps textile de manière à former la conduite 10.

La conduite 10 en textile peut être fabriquée à partir de n'importe quel fil souhaité réalisé dans tout type de matériau ou dans une combinaison de deux ou plusieurs matériaux distincts. Les matériaux sont notamment choisis parmi toutes matières, de préférence à base de matière plastique, aptes à être tissées ou tricotées. Pour les applications aéronautiques, la conduite 10 est de préférence constituée d'un polymère ou d'un tissu thermoplastique (par exemple PEEK, méta-aramide, ou PPS), qui sont tous les deux légers et flexibles. La conduite 10 ne se limite cependant pas aux applications aéronautiques, elle peut être destinée au contraire ou en outre à tout domaine approprié et à toute fin appropriée.

La conduite 10 peut de plus présenter toute longueur adaptée, et des longueurs de conduite 10 peuvent être raccordées si on le souhaite. Un tissu métallisé, une tresse métallique ou textile, un ruban métallique, une gaine rétractable ou tout autre matériau du brevet Goett (ou autre) peut faire partie de la conduite 10 pour des fonctionnalités divers telles qu'une protection électromagnétique, une protection contre les frottements, etc...

Par sa configuration, la conduite 10 peut posséder un petit rayon de courbure et se plier sans se toronner en évitant tout écartement de la paroi 14. En outre, la conduite de l'invention garde dans les courbes, qui sont imposées en utilisation, une forme concave au niveau des rayons de courbure, selon une courbure homogène et sans présence de pincement et/ou d'aplatissement de la conduite.

Ce qui précède est fourni uniquement en vue d'illustrer, d'expliquer et de décrire des modes de réalisation de la présente invention. Des modifications et des adaptations de ces modes de réalisation apparaîtront à l'homme du métier et pourront être apportées sans s'écarter de la portée ou de l'esprit de l'invention. L'intégralité du contenu du brevet Goett est intégrée aux présentes par cette référence.

## Revendications

1. Conduite comprenant une paroi (14) flexible ayant d'une façon générale la forme d'un cylindre, la paroi flexible étant fendue selon au moins une certaine longueur et selon un axe longitudinal, **caractérisée en ce que** la paroi (14) est ondulée.

2. Conduite selon la revendication 1, **caractérisée en ce que** les ondulations comprennent une alternance de nervures (30) et de rainures (26).

3. Conduite selon la revendication 1 ou 2, **caractérisée en ce que** les ondulations s'étendent autour de l'axe longitudinal selon une forme hélicoïdale ou annulaire .

4. Conduite selon la revendication 2 ou 3, **caractérisée en ce que** chaque nervure définit un segment central longitudinal qui forme avec l'axe longitudinal de la conduite, un angle α, de préférence compris entre 40 et 140°.

5. Conduite selon l'une des revendications 2 à 4, **caractérisée en ce que** les nervures et les rainures sont en forme de dents de scie, ou de créneau ou de forme sinusoïdale.

6. Conduite selon l'une quelconque des revendications précédentes, **caractérisée en ce que** la paroi flexible (14) se chevauche pour former une région de chevauchement (22), de préférence le chevauchement correspondant à un angle d'au plus 130°, notamment entre 65 et 130°, en particulier entre et 70 et 110°.

7. Conduite selon l'une quelconque des revendications précédentes, **caractérisée en ce qu'**elle est faite d'un matériau textile comprenant un ou plusieurs fils en matériau flexible, souple, de préférence à base de matière thermoformable, notamment de matière plastique du type PEEK, méta-aramide, PPS, ou d'une combinaison de ceux-ci.

8. Conduite selon l'une quelconque des revendications précédentes, **caractérisée en ce qu'**elle est faite à partir d'une matière textile à base de fils tissés et/ou tricotés.

9. Conduite selon l'une quelconque des revendications précédentes, **caractérisée en ce qu'**elle intègre la fonction de blindage électromagnétique.

10. Utilisation d'une conduite selon l'une quelconque des revendications précédentes, **caractérisée en ce qu'**elle est agencée dans un aéronef, notamment un avion.

11. Aéronef, en particulier avion, comprenant:
a. des moyens pour produire un signal électrique;
b. des moyens pour recevoir le signal électrique ; et
c. une conduite pour transporter le signal électrique des moyens de production aux moyens de réception, **caractérisé en ce que** la conduite comprend une paroi flexible (14) ayant d'une façon générale la forme d'un cylindre, la paroi flexible étant fendue suivant un axe longitudinal, et ondulée.

12. Procédé de fabrication d'une conduite à corps fendu et ondulé, **caractérisé en ce qu'**il comprend les étapes de :
a. placer un noyau ondulé dans un corps fendu non ondulé pour former un ensemble ;
b. placer l'ensemble dans un moule ondulé de forme complémentaire à celle du noyau ondulé ;
c. chauffer et refroidir le moule et l'ensemble;
d. retirer l'ensemble du moule ; et
e. retirer le noyau du corps pour créer la conduite.
